(19) Europäisches Patentamt
European Patent Office
Office européen des brevets

(11)  EP 3 887 780 B1

## (12) FASCICULE DE BREVET EUROPEEN

(45) Date de publication et mention de la délivrance du brevet:
**04.01.2023 Bulletin 2023/01**

(21) Numéro de dépôt: **19868177.7**

(22) Date de dépôt: **26.11.2019**

(51) Classification Internationale des Brevets (IPC):
**G01G 7/02** (2006.01)    **G01G 7/06** (2006.01)

(52) Classification Coopérative des Brevets (CPC):
**G01G 7/00**

(86) Numéro de dépôt international:
**PCT/FR2019/052804**

(87) Numéro de publication internationale:
**WO 2020/109713 (04.06.2020 Gazette 2020/23)**

(54) **ÉQUIPEMENT POUR LA MESURE SANS CONTACT DU POIDS D'UN EQUIPAGE MOBILE**

VORRICHTUNG ZUR BERÜHRUNGSLOSEN MESSUNG DES GEWICHTS EINER BEWEGLICHEN ANORDNUNG

APPARATUS FOR CONTACTLESSLY MEASURING THE WEIGHT OF A MOVING ASSEMBLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2018  FR 1871879**

(43) Date de publication de la demande:
**06.10.2021  Bulletin 2021/40**

(73) Titulaire: **ASSOCIATION POUR LA RECHERCHE ET LE DÉVELOPEMENT DES MÉTHODES ET PROCESUS INDUSTRIELS - ARMINES**
**75006 Paris (FR)**

(72) Inventeurs:
• **STRINGARI, Paolo**
  **77760 LA CHAPELLE LA REINE (FR)**
• **PLAYS, Thibault**
  **94250 GENTILLY (FR)**

(74) Mandataire: **IP Trust**
**2, rue de Clichy**
**75009 Paris (FR)**

(56) Documents cités:
EP-A1- 0 170 709        EP-A2- 0 594 033
DE-B3-102016 205 377    FR-A5- 2 239 151

**Description**

Domaine de l'invention

La présente invention concerne le domaine des équipements pour la mesure sans contact du poids mettant en œuvre un principe de lévitation magnétique, et notamment le domaine des balances et des densimètres ou de mesure de la viscosité, du dosage précis ou de la surveillance de processus réactifs ou biologiques.

Le principe général de tels équipements est basé sur la sustentation magnétique d'un équipage mobile recevant la charge à caractériser, avec un capteur de force qui mesure la force appliquée à un aimant interagissant magnétiquement avec l'équipage mobile.

État de la technique

On connaît dans l'état de la technique la balance à suspension magnétique commercialisée par la société LINSEIS sous la référence STA MSB PT1 (nom commercial). Une telle balance est composée d'un module de pesée pour l'acquisition des données, un couplage à suspension magnétique transmettant le poids de l'échantillon sans contact vers le module de pesée, un capteur de déplacement pour le positionnement du module suspendu ainsi qu'un régulateur.

La transmission du poids de l'échantillon se fait à l'aide d'un aimant fixe et d'un aimant suspendu. L'aimant suspendu est un aimant permanent, l'aimant fixe est un électroaimant connecté sur le module de pesée. La géométrie est du type vertical avec pesée sous socle.

Le signal du capteur de déplacement règle le courant de l'électroaimant à l'aide d'un régulateur PID permettant de tenir l'aimant en suspension. Ceci permet de garder le module de pesée sous conditions ambiantes et de le protéger des températures et des pressions extrêmes ainsi que des gaz corrosifs. Ceci permet de réaliser des conditions de mesures dans une plage de température et pressions qui ne sont pas réalisables avec une thermobalance classique.

On connaît aussi dans l'état de la technique le brevet allemand DE102016205377 décrivant un dispositif de mesure permettant de déterminer une force agissant sur un corps de mesure, comportant un corps de mesure, auquel est associé un premier agencement d'aimants et avec un capteur auquel est associé un second agencement d'aimants qui, pour une interaction magnétique mutuelle, permet un couplage sans contact entre le corps de mesure et le capteur. Selon l'invention, l'un des agencements magnétiques comprend un supraconducteur et l'autre des agencements magnétiques comprend un aimant permanent, le capteur est associé à un dispositif capteur pour déterminer une quantité physique pour le couplage de force entre le corps de mesure et le capteur et dans lequel un dispositif d'évaluation est prévu pour traiter un signal de capteur fourni par le dispositif capteur.

Le brevet européen EP0170709 décrit un dispositif permettant de coupler sans contact une partie flottante munie d'un aimant dans un boîtier à un dispositif permettant de mesurer une force extérieure au boîtier qui est connectée à un électroaimant.

Le brevet FR2239151 décrit un système de suspension pour obtenir la stabilité de positionnement d'un objet mobile sans énergie excessive, comprenant :

- un objet mobile ;
- de premier et second moyens d'aimants permanents mutuellement opposés pour suspendre ledit objet mobile de sorte que tontes les charges statiques sont portées par le champ magnétique desdits moyens d'aimants permanents ;
- lesdits premier et second moyens d'aimants permanents fournissant un équilibre instable de suspension dudit objet mobile lorsque ledit objet mobile s'éloigne de la position de force Théâtre desdits premier et second moyens d'aimants permanents ;
- des premier et second moyens d'application de forces d'électroaimants pour exercer des forces complémentaires électriquement contrôlables sur ledit objet mobile, lesdits premier et second moyens d'application de forces d'électroaimants positionnas pour faire que ledit objet mobile retourne à la position de force neutre lorsque les forces complémentaires contrôlables électriquement sont exercées sur ledit objet mobile ; et
- des moyens pour exciter différentiellement lesdits premier et second moyens d'électro-aimants pour faire que des forces complémentaires contrôlables électriquement agissent sur ledit objet mobile, et de cette manière obtiennent la stabilité de positionnement dudit objet mobile seulement lorsque ledit objet mobile s'éloigne de ladite position de force neutre.

Le brevet européen EP170709 décrit une autre réalisation connue d'un dispositif de couplage sans contact d'une pièce suspendue avec un capteur de force, dans lequel la pièce suspendue se trouve dans un boîtier et est pourvue d'un aimant, et le capteur de force se trouve à l'extérieur du boîtier et est pourvu d'un électroaimant commandable, la commande de l'électroaimant se produisant selon la sortie d'un dispositif de mesure pour constater la distance entre les deux aimants au moyen d'un circuit de régulation pour maintenir cette distance, caractérisé par le fait que le dispositif de mesure est monté fixe par rapport au boîtier et notamment à l'intérieur de ce boîtier, et que, au lieu du maintien de la distance entre les aimants, c'est le maintien d'une position nominale donnée de la pièce suspendue par rapport au boîtier qui détermine la commande de l'électroaimant.

Le brevet EP0594033 décrit un autre exemple de réalisation connu dans l'art antérieur, de dispositif se composant d'au moins un dispositif de stabilisation et de préférence d'au moins un dispositif de décharge pour recevoir par exemple le poids propre d'un arbre ou des forces statiques, le dispositif de stabilisation se composant d'aimants qui sont disposés par paires sur chaque côté d'une matière intercalée, électriquement conductrice non magnétique, par exemple sous forme plate ou sous forme de cylindre creux et qui induisent des courants de Foucault de sens opposés dans la matière mentionnée ci-dessus, et la matière intercalée entre les aimants étant centrée et les courants de Foucault qui tendent à ramener la matière devenant dominants lorsque la matière se décale par rapport à sa position centrée et exerçant donc une force stabilisatrice, caractérisé en ce que l'épaisseur de la matière correspond au maximum à la profondeur de pénétration magnétique et les aimants sont orientés d'une manière telle que les courants de Foucault mentionnés ci-dessus se compensent entre eux dans une large mesure en état de fonctionnement normal et n'exercent aucune force sensible de freinage.

Inconvénients de l'art antérieur

De manière générale, la lévitation fondée sur le phénomène magnétique se heurte aux limites imposées par le théorème d'Earnshaw qui établit qu'un ensemble de charges ponctuelles ne peut être maintenu dans un équilibre stable uniquement par des interactions d'ordre électrostatique entre les charges.

Les solutions de l'art antérieur proposent différentes alternatives, dont toutes présentent des inconvénients.

Certaines solutions mettent en œuvre un électroaimant et emploient des systèmes de commande pour contrôler le champ magnétique afin de produire les forces de rappel qui agissent directement sur le corps suspendu. Ces solutions nécessitent un circuit électronique complexe.

D'autres solutions pour réaliser une lévitation stable sans contact consistent à utiliser des matériaux supraconducteurs avec des aimants permanents. L'inconvénient est alors de devoir maintenir ces matériaux à des températures proches de la température de l'azote liquide (77° K), ce qui implique des moyens coûteux et onéreux, et peu adaptés à certains environnements d'utilisation.

L'utilisation de bagues de centrages magnétiques pour la stabilisation n'est pas non plus adaptée car elle perturbe la mesure pondérale.

Solution apportée par l'invention

Afin de remédier à ces inconvénients la présente invention est basée sur une solution de stabilisation de l'aimant mobile par un guide amagnétique vibrant transversalement traversant un aimant mobile aligné avec un aimant fixe aimanté en sens opposé selon l'axe dudit guide amagnétique.

Ce guide vibrant transversalement déplace continument les points de contact entre le guide et le canal traversant l'aimant mobile.

L'invention concerne selon son acception la plus générale un équipement pour la mesure sans contact du poids d'un équipage mobile en translation selon un axe vertical Z, ledit équipage mobile comporte un aimant permanent APM aimanté selon ledit axe Z et des moyens pour assurer la lévitation magnétique dudit équipage mobile, lesdits moyens de lévitation étant associés à un moyen de mesure de la force exercée entre ledit équipage mobile et lesdits moyens de lévitation.

Le moyen de lévitation est un aimant permanent, aimanté APF selon ledit axe Z, en opposé à l'aimantation dudit aimant permanent mobile APM, lesdits aimants APM et APF étant alignés selon ledit axe vertical Z par l'intermédiaire d'un guide non magnétique traversant ledit équipage mobile, ledit guide étant animé d'un mouvement vibratoire par rapport à l'aimant permanent APM. Ce mouvement vibratoire est appliqué :

- Soit au guide, avec au moins une composante radiale
- Soit à l'aimant avec une composante axiale.

Dans les deux cas, le mouvement vibratoire relatif permet de réduire l'impact des frottements de l'aimant mobile par rapport au guide et d'assurer une mesure fiable et non perturbée.

Selon une variante, ledit équipage mobile est disposé dans une enceinte pour le remplissage avec un fluide. Cette enceinte permet d'isoler la masse à mesurer ou de mesurer la densité d'un fluide dans lequel l'équipage mobile est plongé.

Avantageusement, ladite enceinte comporte des moyens de contrôle d'au moins un paramètre physique tel que la température ou la pression.

Selon une variante ladite enceinte de mesure présente une entrée et une sortie pour la mesure en continu de la densité d'un fluide circulant.

Selon une autre variante, ladite enceinte de mesure est fermée de manière étanche.

Selon un mode de réalisation particulier, ledit équipage mobile présente une surface active physico-chimique.

De préférence, ledit aimant permanent fixe est solidaire d'une balance.

Selon une autre variante, ledit équipage mobile présente un coefficient de dilatation très faible.

On entendra par « coefficient de dilatation très faible » un coefficient de dilatation linéaire inférieur, à température ambiante, à $10^{-5}$ $C^{-1}$, par exemple de l' Invar (marque déposée désignant un alliage, par exemple 36 %Ni + 64 %Fe), du titane, de la porcelaine, du quartz, du verre, de la stéatite ou du Zerodur (nom commercial).

De préférence, le jeu entre le guide et le passage dans l'équipage mobile autorise un basculement dudit équipage mobile d'un angle maximum compris entre 0,05° et 0,5°.

Avantageusement, ledit guide est excité par un actionneur électromagnétique.

Description détaillée d'un exemple non limitatif de l'invention

La présente invention sera mieux comprise à la lecture de la description détaillée d'un exemple non limitatif de l'invention qui suit, se référant au dessin annexé où :

- la figure 1 représente une vue schématique en coupe d'un premier exemple d'équipement selon l'invention
- la figure 2 représente une vue schématique en coupe d'un deuxième exemple d'équipement selon l'invention

Description d'un premier exemple de réalisation de l'invention

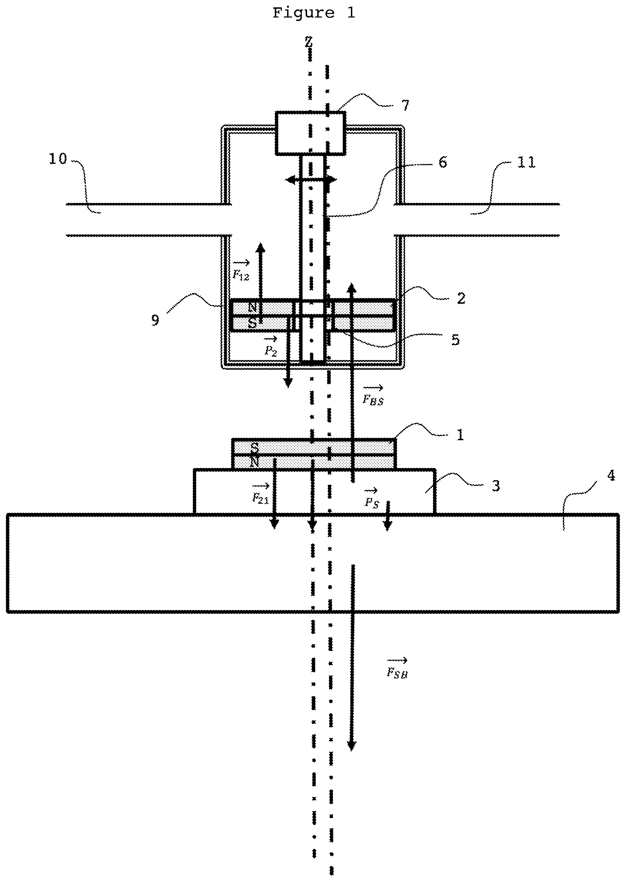

L'équipement décrit en référence à la figure 1 comprend deux aimants permanents (1, 2) alignés selon un axe Z et aimantés en sens opposés selon un axe vertical Z.

Le premier aimant permanent (1) est fixe et solidaire du plateau (3) d'une balance (4).

Le second aimant permanent (2) est mobile et présente un canal médian axial de guidage, de section cylindrique (5). Ce canal médian (5) est traversé par un guide amagnétique (6), par exemple en titane. Ce guide (6) est animé par un mouvement vibratoire comportant une ou plusieurs composantes transversales (c'est-à-dire perpendiculaires à l'axe Z).

L'actionnement de ce mouvement vibratoire est assuré par un actionneur vibrant (7). L'extrémité opposée du guide (6) peut être fixe ou libre.

L'instabilité de l'aimant (2) résultant du théorème de Earnshaw provoque un basculement par rapport au plan transversal. L'amplitude angulaire de ce basculement est limitée par le jeu entre le canal (5) et le guide (6). Typiquement, ce jeu permet un débattement de 0,1°, et de préférence inférieur à 1°.

Les vibrations transversales du guide (6) provoquent un déplacement permanent du point de contact entre le canal (5) et le guide (6), avec des périodes de passage d'un point de contact à un autre, souvent diamétralement opposé, pendant lequel il n'y a aucun contact entre le guide (6) et l'aimant (2), et donc aucun frottement.

Dans ce cas, l'équation des forces est la suivante :

- avec $P_1$ et $P_2$ désignant respectivement le poids de l'aimant (1) et le poids de l'aimant (2) avec sa charge.
- $P_s$ désignant le poids du plateau de la balance (3).
- $F_{12}$ et $F_{21}$ désigne les forces de répulsion magnétique entre les aimants (1, 2). Ces forces forment une paire action-réaction.
- $F_{BS}$ désigne la force appliquée par la balance sur le système composé des aimants et du plateau et $F_{SB}$ la force appliquée par le système sur la balance. Ces deux forces forment une autre paire action-réaction.

$$F_{BS} = P_1 + P_2 + P_s \quad \text{mais} \quad F_{BS} = F_{SB} \text{ (paire action-réaction).}$$

Que l'aimant (2) soit en lévitation ou pas, la force appliquée sur la balance sera toujours la même. En conséquence, la balance indiquera toujours la même valeur pour la masse du système.

Cette situation se produit seulement lorsque l'aimant mobile (2) est :

a) libre de se déplacer sans frottement selon l'axe vertical
b) positionné à la verticale de l'aimant (1), de manière coaxiale.

Pour concilier ces deux conditions nonobstant l'instabilité résultant du théorème d'Earnshaw, l'utilisation d'un guide animé d'un mouvement de vibration transversale permet d'assurer une situation évitant tout contact permanent entre le canal (5) et le guide (6), et occasionnant une situation d'absence de contact temporaire répétée.

La fréquence de vibration est choisie pour ne pas correspondre à une fréquence propre de l'équipage mobile. Typiquement, une fréquence comprise entre 50 et 1000 hz été déterminée expérimentalement comme adaptée.

La fréquence des vibrations peut être déterminée de manière empirique en faisant évoluer par sauts la fréquence, et en observant les fluctuations des indications de la balance.

La fréquence est considérée comme adaptée lorsque les indications de la balance sont stables et convergent le plus rapidement vers une indication invariante. Une condition nécessaire pour pouvoir considérer qu'une fréquence est adaptée est que l'indication de la balance revienne à la même valeur après plusieurs perturbations de l'équilibre du système (répétabilité).

Description d'un deuxième exemple de réalisation

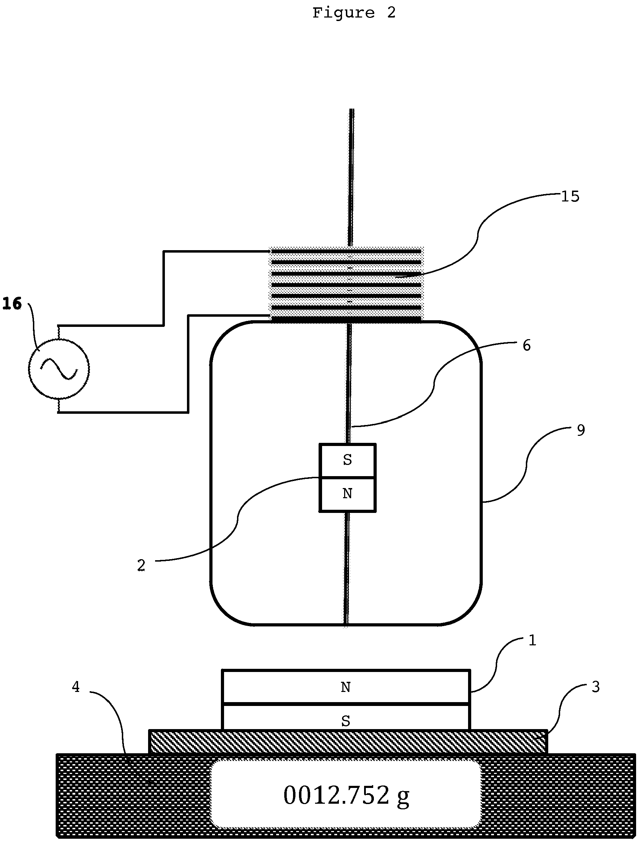

L'équipement décrit en référence à la figure 2 comprend deux aimants permanents (1, 2) alignés selon un axe Z et aimantés en sens opposés selon un axe vertical Z.

Le premier aimant permanent (1) est fixe et solidaire du plateau (3) d'une balance (4).

Le second aimant permanent (2) est mobile et présente un canal médian axial de guidage, de section cylindrique. Ce canal médian (5) est traversé par un guide amagnétique (6), par exemple en titane.

Ce guide (6) est dans ce deuxième de réalisation fixe, aligné selon un axe vertical Z centré par rapport aux deux aimants (1, 2).

L'instabilité de l'aimant (2) résultant du théorème de Earnshaw est compensé comme dans le mode de réalisation précédent par le guide (6) qui transverse le canal formé dans l'aimant (2) et l'empêche de tourner sur lui-même. Pour éléminer l'effet des forces de frottement, on procède selon ce deuxième mode de réalisation à une vibration de l'aimant (2) provoquée par une bobine (15) alimentée par un générateur de courant alternatif à une fréquence basse, typiquement entre 0,1 Hz et 10 Hz, et préférentiellement entre 0,5 et 3 Hz. L'intensité du champs sera déterminée pour produire un déplacement de l'aimant (2) par rapport à la position d'équilibre comprise entre $\pm$ 0,5 et $\pm$ 5 millimètres, typiquement $\pm$ 2 millimètres. Le déplacement vibratoire de l'aimant (2) selon l'axe vertical permet d'éliminer l'effet des forces de frottement sur le poids de l'aimant (2) dans le cas d'une acquisition de la mesure de poids de l'équipage mobile pendant un temps significativement supérieur à une période de vibration.

Dans ce deuxième mode de réalisation, les forces de frottements sont affranchies par l'acquisition dans le temps de la valeur du poids. Le frottement aura une influence sur l'amplitude du mouvement du flotteur, mais pas sur la valeur moyenne du poids mesuré. La valeur moyenne est donc le poids réel.

La mesure du poids est réalisée par la moyenne de la mesure de la balance, sur une période de quelques oscillations, typiquement 10 à 100 oscillations de l'aimant (2).

Une erreur minime sera en revanche induite à cause de l'asymétrie de la force magnétique appliquée par la bobine (15) sur l'aimant (2), la distance entre les deux n'étant pas constante. Cette erreur peut être estimée par une simulation ou par une calibration avec des masses ou densités de référence, pour ajuster le calcul de la moyenne par un facteur de correction pour prendre en compte cette erreur résiduelle.

Utilisation de l'équipement

L'équipement peut être utilisé pour différents types de mesure.

En premier lieu, il permet de mesurer la masse d'une charge déposée sur un plateau solidaire de l'aimant mobile (2). Cette mesure peut être effectuée sans contact avec le reste de l'équipement, éventuellement en atmosphère confinée lorsque l'aimant mobile (2) est disposé dans une enceinte fermée (9).

En second lieu, il permet de mesure la densité d'un fluide contenu dans l'enceinte (9). L'enceinte peut présenter un conduit d'arrivée (10) et un conduit d'évacuation (11) de fluide.

**Revendications**

1. - Équipement pour la mesure sans contact du poids d'un équipage mobile en translation selon un axe vertical Z, ledit équipage mobile comportement un aimant permanent APM (2) aimanté selon ledit axe Z et des moyens pour assurer la lévitation magnétique dudit équipage mobile, ledit moyen de lévitation étant associé à un moyen de mesure de la force exercée entre ledit équipage mobile et ledit moyen de lévitation

   **Caractérisé en ce que**
   Ledit moyen de lévitation est un aimant permanent, aimanté APF (1) selon ledit axe Z, en opposé à l'aimantation dudit aimant permanent mobile APM (2), lesdits aimants APM (2) et APF (1) étant alignés selon ledit axe vertical Z par l'intermédiaire d'un guide (6) non magnétique traversant ledit équipage mobile,

Ledit équipement comprenant en outre un moyen pour appliquer un déplacement vibratoire dudit aimant permanent mobile APM (2) par rapport audit guide (6).

2. - Équipement pour la mesure sans contact du poids d'un équipage mobile selon la revendication 1 **caractérisé en ce que** ledit guide (6) est animé d'un mouvement vibratoire radiale comprenant au moins une composante radiale.

3. - Équipement pour la mesure sans contact du poids d'un équipage mobile selon la revendication 1 **caractérisé en ce que** ledit aimant (2) est soumis à un champs magnétique vibratoire selon l'axe vertical Z et **en ce qu'**il comporte un moyen de calcul de la moyenne des forces mesurées par ledit moyen de mesure.

4. - Équipement pour la mesure sans contact du poids d'un équipage mobile en translation selon la revendication 1 **caractérisé en ce que** ledit équipage mobile est disposé dans une enceinte (9) pour le remplissage avec un fluide.

5. - Équipement selon la revendication 4 **caractérisé en ce que** ladite enceinte (9) comporte des moyens de contrôle d'au moins un paramètre physique.

6. - Équipement selon la revendication 4 **caractérisé en ce que** ladite enceinte (9) présente une entrée (10) et une sortie (11) pour la mesure en continu de la densité d'un fluide circulant.

7. - Équipement selon la revendication 4 **caractérisé en ce que** ladite enceinte (9) est fermée de manière étanche.

8. - Équipement selon la revendication 1 **caractérisé en ce que** ledit aimant permanent fixe (1) est solidaire d'une balance (4).

9. - Équipement selon la revendication 1 **caractérisé en ce que** ledit équipage mobile présente un coefficient de dilatation linéaire inférieur à $10^{-5}$ C$^{-1}$, à température ambiante.

10. - Équipement selon la revendication 1 **caractérisé en ce que** le jeu entre le guide et le passage dans équipage mobile autorise un basculement dudit équipage mobile d'un angle maximum compris entre 0,05° et 0,5°.

11. - Équipement selon la revendication 2 **caractérisé en ce que** ledit guide (6) est excité par un actionneur électromagnétique (7).

12. - Équipement selon la revendication 3 **caractérisé en ce que** le jeu entre le guide et le passage dans équipage mobile autorise un basculement dudit équipage mobile d'un angle maximum compris entre 0,05° et 0,5°.

**Patentansprüche**

1. Einrichtung für die berührungslose Messung des Gewichts einer bewegbaren Ausrüstung, die entlang einer vertikalen Achse Z verschoben wird, wobei die bewegbare Ausrüstung einen Permanentmagneten APM (2), der entlang der Z-Achse magnetisiert ist, und Mittel zum Sicherstellen des magnetischen Schwebens der bewegbaren Ausrüstung aufweist, wobei das Mittel zum Schweben einem Mittel zum Messen der Kraft zugeordnet ist, die zwischen der bewegbaren Ausrüstung und dem Mittel zum Schweben ausgeübt wird,

   **dadurch gekennzeichnet, dass**
   das Mittel zum Schweben ein Permanentmagnet APF (1) ist, der entlang der Z-Achse magnetisiert ist, der zu der Magnetisierung des bewegbaren Permanentmagneten APM (2) entgegengesetzt ist, wobei die Magnete APM (2) und APF (1) entlang der vertikalen Z-Achse durch eine nicht magnetische Führung (6) ausgerichtet sind, die durch die bewegbare Ausrüstung verläuft, die Einrichtung ferner umfassend ein Mittel zum Anwenden einer Schwingungsverlegung des bewegbaren Permanentmagneten APM (2) hinsichtlich der Führung (6).

2. Einrichtung für die berührungslose Messung des Gewichts einer bewegbaren Ausrüstung nach Anspruch 1, **dadurch gekennzeichnet, dass** die Führung (6) von einer radialen Schwingungsbewegung angetrieben wird, umfassend mindestens eine radiale Komponente.

3. Einrichtung für die berührungslose Messung des Gewichts einer bewegbaren Ausrüstung nach Anspruch 1, **dadurch gekennzeichnet, dass** der Magnet (2) einem schwingenden Magnetfeld entlang der vertikalen Achse Z ausgesetzt ist und dass er ein Mittel zum Berechnen des Durchschnitts der durch das Mittel zum Messen gemessenen Kräfte aufweist.

4. Einrichtung für die berührungslose Messung des Gewichts einer bewegbaren Ausrüstung, die verschoben wird, nach Anspruch 1, **dadurch gekennzeichnet, dass** die bewegbare Ausrüstung in einem Behälter (9) zum Füllen mit einem Fluid angeordnet ist.

5. Einrichtung nach Anspruch 4, **dadurch gekennzeichnet, dass** der Behälter (9) Mittel zum Steuern mindestens eines physikalischen Parameters aufweist.

6. Einrichtung nach Anspruch 4, **dadurch gekennzeichnet, dass** der Behälter (9) einen Einlass (10) und einen Auslass (11) zum kontinuierlichen Messen der Dichte eines zirkulierenden Fluids vorweist.

7. Einrichtung nach Anspruch 4, **dadurch gekennzeichnet, dass** der Behälter (9) druckdicht verschlossen ist.

8. Einrichtung nach Anspruch 1, **dadurch gekennzeichnet, dass** der stationäre Permanentmagnet (1) mit einer Waage (4) fest verbunden ist.

9. Einrichtung nach Anspruch 1, **dadurch gekennzeichnet, dass** die bewegbare Ausrüstung bei Umgebungstemperatur einen linearen Ausdehnungskoeffizienten von weniger als $10^{-5}$ C$^{-1}$ vorweist.

10. Einrichtung nach Anspruch 1, **dadurch gekennzeichnet, dass** das Spiel zwischen der Führung und dem Durchgang in der bewegbaren Ausrüstung eine Neigung der bewegbaren Ausrüstung um einen maximalen Winkel zwischen 0,05° und 0,5° ermöglicht.

11. Einrichtung nach Anspruch 2, **dadurch gekennzeichnet, dass** die Führung (6) durch ein Magnetstellwerk (7) erregt wird.

12. Einrichtung nach Anspruch 3, **dadurch gekennzeichnet, dass** das Spiel zwischen der Führung und dem Durchgang in der bewegbaren Ausrüstung eine Neigung der bewegbaren Ausrüstung um einen maximalen Winkel zwischen 0,05° und 0,5° ermöglicht.

## Claims

1. Apparatus for contactlessly measuring the weight of a part that is movable in translation along a vertical axis Z, said movable part comprising a permanent magnet APM (2) that is magnetized along said axis Z and means for magnetically levitating said movable part, said levitation means being associated with means for measuring the force exerted between said movable part and said levitation means,

   **characterized in that**
   said levitation means is a permanent magnet APF (1) that is magnetized along said axis Z, opposite to the magnetization of said movable permanent magnet APM (2), said magnets APM (2) and APF (1) being aligned along said vertical axis Z by means of a nonmagnetic guide (6) that passes through said movable part, said apparatus further including means for applying a vibration displacement of said movable permanent magnet APM (2) with respect to said guide (6).

2. Apparatus for contactlessly measuring the weight of a movable part according to claim 1, **characterized in that** said guide (6) is moved in a radially vibratory manner, the movement including at least one radial component.

3. Apparatus for contactlessly measuring the weight of a movable part according to claim 1, **characterized in that** said magnet (2) is subjected to a vibratory magnetic field along the vertical axis Z and **in that** it comprises a means for calculating the average of the forces measured by said measuring means.

4. Apparatus for contactlessly measuring the weight of a part that is movable in translation according to claim 1, **characterized in that** said movable part is placed in an enclosure (9) to be filled with a fluid.

5. Apparatus according to claim 4, **characterized in that** said enclosure (9) comprises means for controlling at least one physical parameter.

6. Apparatus according to claim 4, **characterized in that** said enclosure (9) has an inlet (10) and an outlet (11) for the continuous measurement of the density of a circulating fluid.

7. Apparatus according to claim 4, **characterized in that** said enclosure (9) is sealingly closed.

8. Apparatus according to claim 1, **characterized in that** said fixed permanent magnet (1) is rigidly connected to a weighing machine (4).

9. Apparatus according to claim 1, **characterized in that** said movable part has a coefficient of linear expansion of less than $10^{-5}$ C$^{-1}$ at ambient temperature.

10. Apparatus according to claim 1, **characterized in that** the clearance between the guide and the passage through the movable part allows said movable part to tilt by a maximum angle of between 0.05° and 0.5°.

11. Apparatus according to claim 2, **characterized in that** said guide (6) is excited by an electromagnetic actuator (7).

12. Apparatus according to claim 3, **characterized in that** the clearance between the guide and the passage through the movable part allows said movable part to tilt by a maximum angle of between 0.05° and 0.5°.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102016205377
- EP 0170709 A
- FR 2239151
- EP 170709 A
- EP 0594033 A